# EUROPEAN PATENT SPECIFICATION

(11) **EP 0 642 655 B1**
(45) Date of publication and mention of the grant of the patent: **12.03.1997**
(21) Application number: 93912830.2
(22) Date of filing: 27.05.1993
(51) Int. Cl.: G01F 23/28

(54) **AN APPARATUS FOR PRODUCT/WATER INTERFACE MEASUREMENT IN A PRODUCT STORAGE TANK**
VORRICHTUNG ZUM MESSEN EINER GRENZSCHICHT ZWISCHEN WASSER UND EINER ANDEREN FLÜSSIGKEIT IN EINEM BEHÄLTER
APPAREIL POUR LA MESURE DE L'INTERFACE PRODUIT/EAU DANS UN RESERVOIR DE STOCKAGE D'UN PRODUIT

(30) Priority: 28.05.1992 EP 92304822
(43) Date of publication of application: 15.03.1995
(73) Proprietor: SHELL INTERNATIONALE RESEARCH MAATSCHAPPIJ B.V., 2596 HR Den Haag (NL)
(72) Inventor: WELCH, Michael c/o Shell Research Ltd, Pool Lane Ince Chester, Cheshire CH1 3SH (GB)
(86) International application number: PCT/EP93/01357
(87) International publication number: WO 93/24812

(56) References cited:
- EP-A- 0 084 405
- GB-A- 2 183 849
- US-A- 3 935 970
- US-A- 3 995 212

## Description

The invention relates to an apparatus for measuring and monitoring the water/product interface level at the bottom of a product storage tank. In particular, the invention relates to an apparatus for continuously monitoring the water level at the bottom of a product storage tank, e.g. an oil product storage tank.

When storing a product in oil industry, e.g. in a refinery, distribution terminal or depot, careful measurement of the (oil) product (e.g. crude oil, refined products and the like) within clearly defined limits of accuracy is essential not only to ensure that the purchaser of a quantity of (oil) product receives the volume or weight which is invoiced to him and that the seller does not over-deliver, but also to enable a constant check to be kept on stocks, and on storage, transport and handling losses.

In product storage tanks, any free water may accumulate on the tank bottom, due to several causes. For example, water may accompany the (oil) product during transport and when filling the storage tank with (oil) product, water enters the storage tank. Further, generally the supply line to the storage tank used is water washed prior to each delivery to the storage tank and thus there is a risk of water contamination when water is entering the tank ahead of the (oil) product. Generally, there is also any residual water left when filling and emptying storage tanks.

Therefore, in (oil) product storage tanks, water may accumulate at the bottom of the tank and a knowledge of the amount of water, if any, at the bottom of the tank is essential. This ensures that calculation of tank contents deals only with (oil) product stored, not water. This is in particular relevant in countries wherein duty is levied on (oil) products.

Consequently, any miscalculation or loss in product storage and handling now involves product on which duty has been paid. This, coupled with increased environmental requirements has shown the need for more accurate stock accounting systems.

The above is particularly relevant when transfer of custody and/or duty is involved.

At present, testing for water and determination of water level in (oil) product storage tanks, is carried out manually (dipping techniques) with the usual disadvantages regarding personal interpretation (accuracy), safety and measurement frequency.

In tanks where water does accumulate, it is normally maintained below 80 mm, with a maximum expected level of 150 mm and thus there is a need for an instrument which is able to measure the expected water level range.

It is remarked that already many methods and techniques exist to detect product/water interfaces, but due to the abrupt change in dielectric constant, capacitance techniques are most commonly employed. The drawback with using capacitance is that to provide adequate resolution, precise measurements are often necessary. This necessitates either careful circuit design or sophisticated signal processing which can be expensive and complex to implement.

Further, it is already known to apply a co-axial transmission line to determine liquid-level in a tank. Electrical pulses are applied at the line input. Changes in dielectric constant that result from the interface, cause the pulses to be reflected back to the line-input and from the measured reduction in pulse length, the liquid level is calculated. However, the measurement accuracy of this known system is limited by the need to make precision high speed measurements. With respect to known systems for detecting interface in a container, reference is made to US 3,995,212 (disclosing a single wire transmission line); US 3,935,970 (disclosing a radiating antenna) and EP 0.084,405 (disclosing a radio-frequency probe). However, the problem of water/product interface detection at the bottom of product storage tanks and its specific solution according to the present invention have not been disclosed.

It is therefore an object of the invention to provide a cheap and simple apparatus for measuring and providing information on the water level at the bottom of a storage tank.

The invention therefore provides an apparatus for measuring and monitoring the water/product interface level at the bottom of a product storage tank, comprising a sensor assembly which is at the tank bottom and is communicating via signal processing electronics with a means for providing information on said water/product interface level, wherein said assembly comprises a plurality of measurement sensors arranged in a housing provided with one or more openings to enable product/water entering or leaving the sensing area, the sensors of said plurality of measurement sensors being arranged at a different height to cover the measurement range; each measurement sensor comprising an open-circuited co-axial transmission line to produce a signal representing the depth of water at the tank bottom, and the said co-axial transmission line, comprising at its open end a monopole antenna or probe, said probe being surrounded with an insulating material, and further comprising means for exciting the transmission line, and wherein the probe length is less than 1/10 of the wavelength used to excite the transmission line.

The apparatus of the invention makes use of the properties of an open-circuited transmission line (e.g. a co-axial transmission line) to act as a resonant transformer to produce a voltage proportional to the depth of water at the tank bottom. Small changes . in capacitance which result from the interface, are transformed into much larger voltage changes at the sending end which are more easily measured.

A microprocessor compares the voltage measurements with a preprogrammed look-up table to determine water level.

The invention will now be described in more detail by way of example by reference to the accompanying drawings, in which:
fig. 1 represents schematically a system for measuring water level at the bottom of a product storage tank wherein the apparatus of the invention is applied;
fig. 2 represents the sensor assembly of the system of fig. 1; and
fig. 3 represents part of a sensor of the sensor assembly of fig. 2.

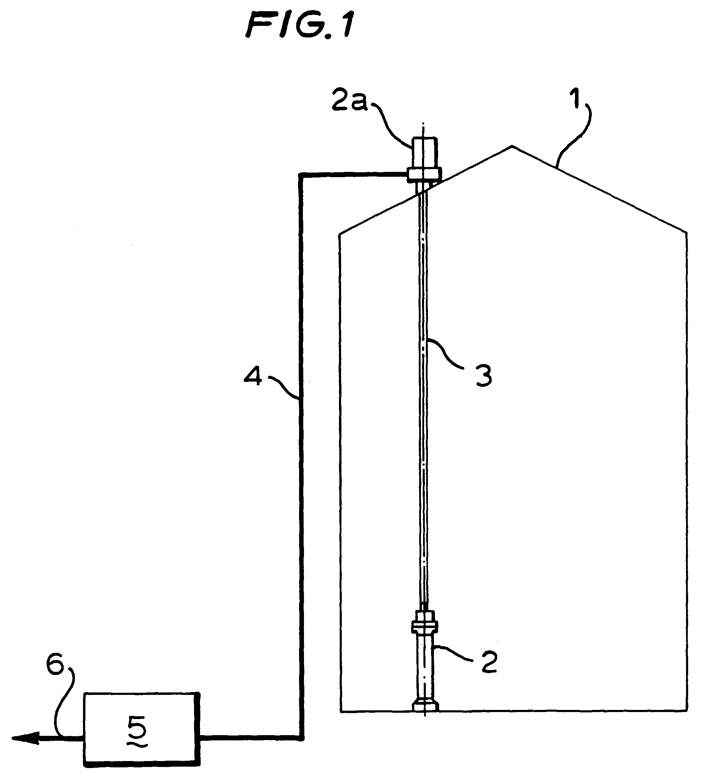

Referring now to fig. 1, a product storage tank 1 has been shown. As already discussed in the foregoing, due to several reasons, water may accumulate at the bottom in the tank.

The apparatus for measuring water level at the bottom of the tank 1 comprises a sensor assembly 2 connected in any manner suitable for the purpose to signal processing electronics 2a.

The sensor assembly 2 comprises a plurality of sensors and is designed to be located in any manner suitable for the purpose at the tank bottom e.g. by means of a winch and guide assembly (not shown for reasons of clarity) and communicates by any suitable connection 3 e.g. via a stainless steel tube with the processing electronics 2a mounted at the tank top.

The processing electronics 2a is connected in any suitable manner (e.g. an armoured cable 4) to an intrinsically safe power supply and serial interface 5.

Information from supply 5 can be transmitted via any suitable line 6 to a host computer (not shown for reasons of clarity).

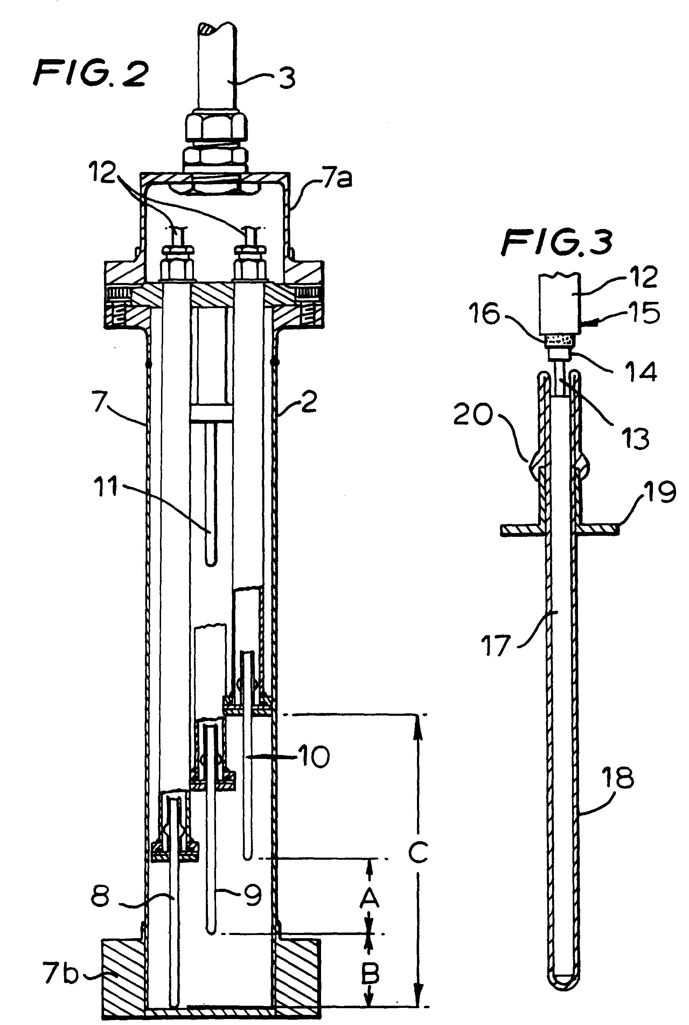

In fig. 2 the sensor assembly 2 has been shown in a partially transparent longitudinal section.

A sensor body 7 is provided with one or more slots (not shown) to enable product/water entering or leaving the sensing area.

The sensor body 7 is connected in any mechanical way suitable for the purpose to the connection 3 shown in fig. 1. Such mechanical details are known to those skilled in the art and will not be described in detail.

Advantageously, there are four sensors (8, 9, 10, 11), each having a length of 100 mm, the lower three (8, 9, 10) being measurement sensors spaced vertically 50 mm apart (distances A and B in fig. 2).

The measurement range, advantageously 200 mm, is represented by C.

The fourth sensor 11 is a reference sensor, located above the water interface. Further, a top cover 7a and a base unit 7b are shown.

Each sensor (8, 9, 10, 11) is connected to its own co-axial cable 12 (only two being shown for reasons of clarity) which via the connection 3 in any suitable manner are connected to the electronics on top of the tank.

For reasons of clarity, mechanical connection details are not represented fully.

Advantageously, the number of measurement sensors is three. However, if the water composition is reasonably consistent, then the number of measurement sensors could be reduced to two. This would reduce the manufacturing complexity and subsequent cost.

Fig. 3 represents a longitudinal section of part of a sensor.

A co-axial transmission line 12 comprises a centre conductor (13), an inner protective covering 14, an outer protective covering 15 and a braided screen 16. In order to increase the capacitive coupling and hence sensitivity the centre conductor 13 is extended by attaching a monopole antenna or probe 17. The outer braid of the co-axial line is removed from the end section of the line, the monopole antenna or probe is attached and the inner conductor and probe are covered by a non-conductive coating. The active area is insulated e.g. by a glass pocket 18. Further, a suitable seal 19 is represented.

This is attached to the glass pocket by a glass to metal seal 20. Advantageously, the length of the transmission line is an odd multiple of the wavelength divided by four. The braid is removed over a length less than 1/10 of the wavelength used to excite the transmission line.

Provided the probe length is less than 1/10 of the wavelength used to excite the transmission line, no appreciable radiation field exists.

In fulfilling the above, only localized measurements are made as the field is contained within a relatively small sample volume.

The operation of the apparatus of the invention is as follows.

As already indicated hereinbefore, the apparatus of the invention is based upon the properties of an open-circuited transmission line. Advantageously, the apparatus of the invention is operated in the frequency range of 10 MHz to 100 MHz. More advantageously, the length of the transmission line is adjusted electronically by optimizing the operating frequency, rather than by choosing the nearest quarter-wavelength multiple to suit the installation.

Transmission lines are known as such to those skilled in the art and the general operation thereof will therefore not be described in detail.

Generally, it can be said that signals are transmitted along the transmission line and are reflected at the surface of the fluid interface, due to a change in dielectric constant. The reflected signals are processed further in order to obtain voltage measurements indicating level.

Calibration data is obtained in any suitable manner. For example, by lowering the sensor assembly 2 through the product interface during installation, recording the sensor outputs and copying them into an appropriate look-up table.

When the antenna or probe is immersed in a fluid, its impedance is related to the complex permittivity of that fluid. If it is assumed that the impedance is reactive, which is a reasonable assumption considering its construction, then the phase shift induced on the transmission line is proportional to the reactance (which is capacitive) appearing at the open-circuit. The equivalent circuit is that of a transmission line terminated by a capacitor, the value of the capacitor being determined by the probes radiating geometry, and the complex permittivity of the medium surrounding the probe.

Various modifications of the invention will become apparent to those skilled in the art from the foregoing description and accompanying drawings.

## Claims

1. An apparatus for measuring and monitoring the water/product interface level at the bottom of a product storage tank, comprising a sensor assembly which is at the tank bottom and is communicating via signal processing electronics with a means for providing information on said water/product interface level; wherein said assembly comprises a plurality of measurement sensors arranged in a housing provided with one or more openings to enable product/water entering or leaving the sensing area, the sensors of said plurality of measurement sensors being arranged at a different height to cover the measurement range; each measurement sensor comprising an open-circuited co-axial transmission line to produce a signal representing the depth of water at the tank bottom, and the said co-axial transmission line, comprising at its open end a monopole antenna or probe, said probe being surrounded with an insulating material, and further comprising means for exciting the transmission line, and wherein the probe length is less than 1/10 of the wavelength used to excite the transmission line.

2. The apparatus as claimed in claim 1, wherein the transmission line is a quarter wave transmission line.

3. The apparatus as claimed in claim 1 or 2, comprising 2 or 3 measurement sensors.

4. The apparatus as claimed in any one of claims 1-3, further comprising a reference sensor.

5. The apparatus as claimed in any one of claims 1-4, wherein the outer braid of the co-axial line is removed from the end section of the line, and the monopole antenna or probe attached, and wherein the inner conductor and probe are covered by a non-conductive coating.

6. The apparatus as claimed in claim 5, wherein the length of the braid removed is less than 1/10 of the wavelength used to excite the transmission line.

7. The apparatus as claimed in any one of claims 1-6, wherein the length of the transmission line is an odd multiple of the wavelength divided by four.

8. The apparatus as claimed in any one of claims 1-7, wherein an operating frequency of 10-100 MHz is applied.

## Patentansprüche

1. Vorrichtung zum Messen und Überwachen des Wasser/Produkt-Grenzschichtpegels am Boden eines Produktspeichertankes, mit einer Sensoranordnung, welche sich am Tankboden befindet und über eine Signalverarbeitungselektronik mit einem Mittel zum Zurverfügungstellen von Information über den genannten Wasser/Produkt-Grenzschichtpegel kommuniziert, wobei die Anordnung eine Mehrzahl von Meßsensoren umfaßt, die in einem Gehäuse angeordnet sind, welches mit einer oder mehreren Öffnungen versehen ist, um zu ermöglichen, daß Produkt/Wasser in den Sensorerfassungsbereich eintritt bzw. diesen verläßt, wobei die Sensoren der genannten Mehrzahl von Meßsensoren auf verschiedenen Höhen angeordnet sind, um den Meßbereich abzudecken; wobei jeder Meßsensor eine leerlaufende Koaxialübertragungsleitung aufweist, um ein die Tiefe des Wassers am Tankboden angebendes Signal zu erzeugen, und die genannte Koaxialübertragungsleitung an ihrem offenen Ende eine einpolige Antenne bzw. Sonde aufweist, die von einem Isoliermaterial umgeben ist, und weiters Mittel zum Anregen der Übertragungsleitung aufweist, wobei die Sondenlänge kleiner als 1/10 der zur Anregung der Übertragungsleitung verwendeten Wellenlänge ist.

2. Vorrichtung nach Anspruch 1, bei welcher die Übertragungsleitung eine λ/4-Übertragungsleitung ist.

3. Vorrichtung nach Anspruch 1 oder 2, mit zwei oder drei Meßsensoren.

4. Vorrichtung nach einem der Ansprüche 1 bis 3, ferner mit einem Referenzsensor.

5. Vorrichtung nach einem der Ansprüche 1 bis 4, bei welcher die äußere Abschirmung der Koaxialleitung vom Endabschnitt der Leitung entfernt und die einpolige Antenne bzw. Sonde angebracht ist, und wobei der Innenleiter und die Sonde von einer nichtleitenden Beschichtung bedeckt sind.

6. Vorrichtung nach Anspruch 5, bei welcher die Länge der entfernten Abschirmung kleiner als 1/10 der zur Anregung der Übertragungsleitung verwendeten Wellenlänge ist.

7. Vorrichtung nach einem der Ansprüche 1 bis 6, bei welcher die Länge der Übertragungsleitung ein ungeradzahliges Vielfaches der durch vier geteilten Wellenlänge ist.

8. Vorrichtung nach einem der Ansprüche 1 bis 7, bei welcher eine Betriebsfrequenz von 10 bis 100 MHz angewandt wird.

## Revendications

1. Appareil pour la mesure et la surveillance du niveau de l'interface eau/produit au fond d'un réservoir de stockage de produit, comprenant un ensemble de détecteurs qui est situé au fond du réservoir et qui communique par l'intermédiaire d'une électronique de traitement de signaux avec un moyen pour fournir des informations concernant ledit niveau de l'interface eau/produit, ledit ensemble comprenant plusieurs détecteurs de mesure agencés dans un boîtier doté d'une ou de plusieurs ouvertures pour permettre au produit et à l'eau de pénétrer dans la région de sondage ou de la quitter, les détecteurs dudit ensemble de détecteurs de mesure étant agencés à des hauteurs différentes, pour couvrir la plage de mesure; chaque détecteur de mesure comprenant une ligne de transmission coaxiale en circuit ouvert pour produire un signal représentant la profondeur de l'eau au fond du réservoir, et ladite ligne de transmission coaxiale, comprenant à son extrémité ouverte une sonde ou antenne unipolaire, ladite sonde étant entourée par un matériau isolant, et comprenant en outre un moyen pour exciter la ligne de transmission, la longueur de la sonde étant inférieure à 1/10 de la longueur d'onde utilisée pour exciter la ligne de transmission.

2. Appareil selon la revendication 1, dans lequel la ligne de transmission est une ligne de transmission à quart d'onde.

3. Appareil selon la revendication 1 ou 2, comprenant deux ou trois détecteurs de mesure.

4. Appareil selon l'une quelconque des revendications 1 à 3, comprenant en outre un détecteur de référence.

5. Appareil selon l'une quelconque des revendications 1 à 4, dans lequel la tresse externe de la ligne coaxiale est enlevée du tronçon d'extrémité de la ligne, et la sonde ou antenne unipolaire y est fixée, le conducteur interne et la sonde étant recouverts par un revêtement non conducteur.

6. Appareil selon la revendication 5, dans lequel la longueur de la tresse enlevée est inférieure à 1/10 de la longueur d'onde utilisée pour exciter la ligne de transmission.

7. Appareil selon l'une quelconque des revendications 1 à 6, dans lequel la longueur de la ligne de transmission est un multiple impair de la longueur d'onde divisée par quatre.

8. Appareil selon l'une quelconque des revendications 1 à 7, dans lequel on utilise une fréquence de travail de 10 à 100 MHz.
